# EUROPEAN PATENT APPLICATION

(11) **EP 4 703 999 A1**
(43) Date of publication of application: **04.03.2026**
(21) Application number: 25194605.9
(22) Date of filing: 07.08.2025
(51) Int. Cl.: G06Q 10/10, G06N 3/0475, H04L 12/18, H04L 65/401, H04L 65/403, H04N 7/14, H04N 7/15

(54) **ABSENT USER INTERACTION DURING A VIRTUAL MEETING**

(30) Priority: 29.08.2024 US 202418819848
(71) Applicant: GOOGLE LLC, Mountain View CA 94043 (US)
(72) Inventor: VOLKOV, Anton, Mountain View, CA 94043 (US); MEJIA ABREU, Felix David, Mountain View, CA 94043 (US); VOLZ, Justin, Mountain View, CA 94043 (US); CITRON, David Alan Sleeper, Mountain View, CA 94043 (US); SHEN, Jennifer Iting, Mountain View, CA 94043 (US); CALLAS, Jan Arvid Kristofer, Mountain View, CA 94043 (US); DALLAFINA, Alessandro, 8002 Zurich (CH); BARLOW, Joy Julia, Mountain View, CA 94043 (US); CHIN, Constance Moser, Mountain View, CA 94043 (US); SCHIEFFER, Stella Viktoria, 8002 Zurich (CH); FISHER, Avery Daniel Wilson, Mountain View, CA 94043 (US); SHERNAN, Ethan Samuel, Mountain View, CA 94043 (US); LEVIN, Dmitry Denisovich, Mountain View, CA 94043 (US); MRUTHYUNJAYA, Ravindra, Mountain View, CA 94043 (US); SANGLAJI, Maryam, Mountain View, CA 94043 (US); MONTAY, Francois, 8002 Zurich (CH); LIU, Decheng, Mountain View, CA 94043 (US); HUTCHINGS, Steven Leon, Mountain View, CA 94043 (US); WENG, David Kaiwei, Mountain View, CA 94043 (US)
(74) Representative: Crook, Hugh Alexander

(57) **Abstract**

A method includes obtaining input of a first user that has been invited to participate in a virtual meeting. The input indicates the first user is requesting attendance of the virtual meeting by proxy. The input provides first data to be discussed during the virtual meeting. The method includes causing a virtual meeting UI presented during the virtual meeting to include a first region corresponding to the first user. The first region includes at least a portion of the first data. The method includes, during a discussion of the first data during the virtual meeting, detecting an indication of a task to be performed and generating a prompt identifying the task as input to a generative AI model. The method includes causing second data to be presented in the virtual meeting UI. The second data may be based on an output of the generative AI model.

## Description

### TECHNICAL FIELD

Aspects and implementations of the present disclosure relate to virtual meetings and more specifically to absent user interaction during a virtual meeting.

### BACKGROUND

Virtual meetings can take place between multiple participants via a virtual meeting platform. A virtual meeting platform can include tools that allow multiple client devices to be connected over a network and share each other's audio (e.g., voice of a user recorded via a microphone of a client device) and/or video stream (e.g., a video captured by a camera of a client device, or video captured from a screen image of the client device) for efficient communication. To this end, the virtual meeting platform can provide a user interface that includes multiple regions to present the video stream of each participating client device.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor delineate any scope of the particular implementations of the disclosure or any scope of the claims. Its sole purpose is to present some concepts of the disclosure in a simplified form as a prelude to the more detailed description that is presented later.

An aspect of the disclosure provides a method. The method includes obtaining input of a first user that has been invited to participate in a virtual meeting between multiple participants. The input can indicate the first user is requesting attendance of the virtual meeting by proxy. The input can provide first data to be discussed during the virtual meeting. The method includes causing a virtual meeting user interface (UI) presented during the virtual meeting to include a first region corresponding to the first user. The first region may include at least a portion of the first data. The method includes, during a discussion of the first data during the virtual meeting, detecting an indication of a task to be performed and generating a prompt identifying the task as input to a generative AI model. The method includes causing second data associated with the task to be presented in the virtual meeting UI. The second data associated with the task may be based on an output of the generative AI model.

Another aspect of the disclosure provides a system. The system includes a processing device and a memory coupled to the processing device. The processing device is configured to perform one or more operations. The operations include obtaining input of a first user that has been invited to participate in a virtual meeting between multiple participants. The input can indicate the first user is requesting attendance of the virtual meeting by proxy. The input can provide first data to be discussed during the virtual meeting. The operations include causing a virtual meeting UI presented during the virtual meeting to include a first region corresponding to the first user. The first region may include at least a portion of the first data. The operations include, during a discussion of the first data during the virtual meeting, detecting an indication of a task to be performed and generating a prompt identifying the task as input to a generative AI model. The operations include causing second data associated with the task to be presented in the virtual meeting UI. The second data associated with the task may be based on an output of the generative AI model.

Another aspect of the disclosure provides a non-transitory computer-readable storage medium that includes instructions that, when executed by a processing device, cause the processing device to perform operations. The operations include obtaining input of a first user that has been invited to participate in a virtual meeting between multiple participants. The input can indicate the first user is requesting attendance of the virtual meeting by proxy. The input can provide first data to be discussed during the virtual meeting. The operations include causing a virtual meeting UI presented during the virtual meeting to include a first region corresponding to the first user. The first region may include at least a portion of the first data. The operations include, during a discussion of the first data during the virtual meeting, detecting an indication of a task to be performed and generating a prompt identifying the task as input to a generative AI model. The operations include causing second data associated with the task to be presented in the virtual meeting UI. The second data associated with the task may be based on an output of the generative AI model.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example system architecture for absent user interaction during a virtual meeting, in accordance with some implementations of the present disclosure.
**FIG. 2A** illustrates a schematic block diagram for an artificial intelligence (AI) training subsystem of a virtual meeting platform, in accordance with some implementations of the present disclosure.
**FIG. 2B** illustrates a schematic block diagram for an AI subsystem of a virtual meeting platform, in accordance with some implementations of the present disclosure.
**FIG. 3** illustrates a flow diagram of a method for absent user interaction during a virtual meeting, in accordance with some implementations of the present disclosure.
**FIG. 4** illustrates an example user interface for a calendar application, in accordance with some implementations of the present disclosure.
**FIG. 5** illustrates an example user interface for a virtual meeting, in accordance with some implementations of the present disclosure.
**FIG. 6** illustrates another example user interface for a virtual meeting, in accordance with some implementations of the present disclosure.
**FIG. 7** illustrates an example user interface for a calendar application, in accordance with some implementations of the present disclosure.
**FIG. 8** illustrates a block diagram depicting an example computer system, in accordance with some implementations of the present disclosure.

### DETAILED DESCRIPTION

Aspects of the present disclosure relate to the participation, in a virtual meeting, of an absent invited virtual meeting user. A virtual meeting platform can enable video-based conferences between multiple participants via respective client devices that are connected over a network and share each other's audio (e.g., voice of a user recorded via a microphone of a client device) and/or video streams (e.g., a video captured by a camera of a client device) during a virtual meeting. In some instances, a virtual meeting platform can enable a significant number of client devices (e.g., up to one hundred or more client devices) to be connected via the virtual meeting. A participant of a virtual meeting can speak to the other participants of the virtual meeting. Some existing virtual meeting platforms can provide a user interface (UI) to each client device connected to the virtual meeting, where the UI displays visual items corresponding to the video streams shared over the network in a set of regions in the UI.

Some users may not be able to attend a virtual meeting or may not be able to attend the entirety of a virtual meeting, for example, because the user may have multiple meetings scheduled at the same time, or a first meeting can last longer than scheduled and can overlap with a subsequent meeting. In a typical virtual meeting, if a user is not present during the virtual meeting or not present for a portion of the meeting, the user cannot participate in the virtual meeting or in the missed portion and cannot provide input on the points being discussed. This presents several disadvantages. For example, the user that is invited to the virtual meeting but is unable to attend cannot provide input to the points discussed during the virtual meeting, resulting in the meeting being less efficient and effective. Additionally, a participant present at the virtual meeting may need to take notes for the absent user, which can be distracting for the note-taking participant and may not allow the note-taking participant to fully participate in the meeting. Furthermore, the note-taking user can miss some discussion points or misinterpret the items being discussed. The note-taking user may then need to send the notes to the absent user (e.g., through email) or may need to have another virtual meeting with the absent user to provide the information the absent user missed, which can use computing system resources. Additionally, participating in a large number of virtual meetings can be exhausting for users.

Aspects and implementations of the present disclosure address the above and other deficiencies by providing systems and methods that allow the participation, in a virtual meeting, of an absent invited virtual meeting user. A first user that is unable to attend a virtual meeting can provide first data pertaining to the virtual meeting. The first data can indicate that the first user is requesting attendance of the virtual meeting by proxy and may include discussion points for the virtual meeting, questions, video or audio segments, or other types of data. User attendance by proxy may refer to a user's participation in a virtual meeting without being physically present at the virtual meeting when it is conducted. During the virtual meeting, a virtual meeting UI can be presented on the virtual meeting's participants' client devices, and the virtual meeting UI may include a first region that corresponds to the absent first user. The first region may include a UI element that simulates the presence of the absent first user in the virtual meeting. For example, the first region can appear near other similar regions that correspond to participants that are present at the virtual meeting, and the first region can present an image or avatar of the first user. The first region can present at least a portion of the first data. For example, the first region can include a question submitted by the absent first user. The virtual meeting participants can then discuss the first data (e.g., the participants can answer the submitted question). An artificial intelligence (AI) model can generate responses to the first data based on the transcript of the virtual meeting. An AI model can simulate the participation of the absent user by generating follow-up questions to the responses. An AI model can identify, from the discussion of the first data, a task to be performed. An AI model can generate a summary of the virtual meeting that covers, among other things, discussion of the first data during the virtual meeting (e.g., responses to the first data provided by the participants). The summary or task can be made accessible to the absent first user.

Aspects of the present disclosure provide technical advantages over previous solutions. Aspects of the present disclosure provide a way for a user that is not present during a virtual meeting to provide discussion points or other materials for use during the virtual meeting. Aspects of the present disclosure provide a virtual meeting system that presents UI elements that display the discussion points and other materials so the present participants can discuss the discussion points and materials. Aspects of the present disclosure provide one or more generative AI models that can generate responses to the discussion points and materials, suggest follow-up questions, identify tasks to be performed, and generate summaries of the virtual meeting, which increases the efficiency of the virtual meeting and the absent user. Additionally, aspects of the present disclosure reduce the need for a note-taking virtual meeting participant to follow up with the absent user, which reduces the use of computing system resources (e.g., by reducing emails sent from the note-taking participant to the absent user and reducing additional virtual meetings between the note-taking user and the absent user).

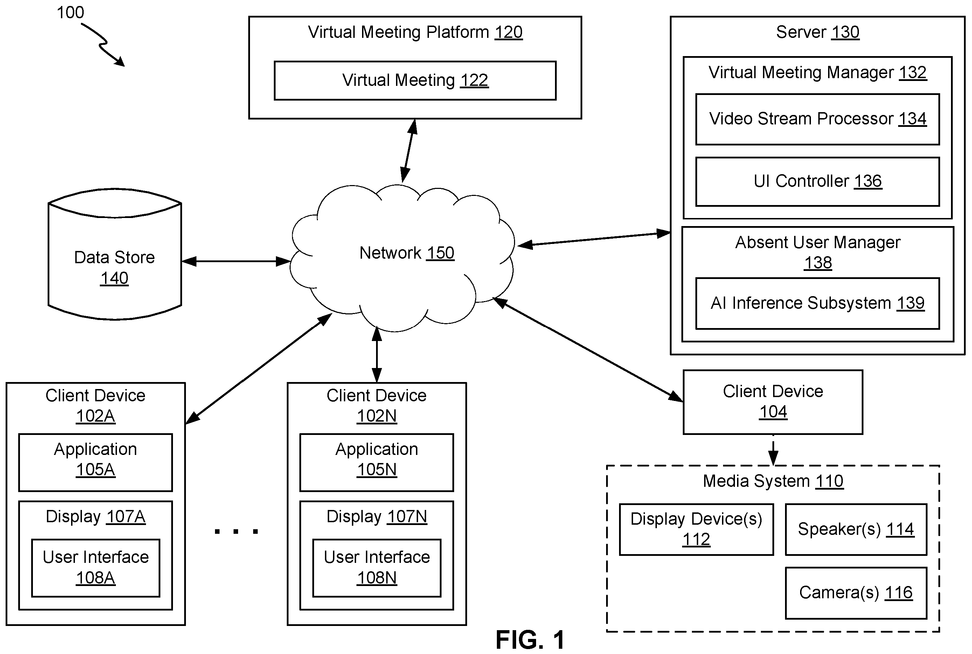

**FIG. 1** illustrates an example system architecture 100, in accordance with implementations of the present disclosure. The system architecture 100 includes one or more client devices 102A-N or 104, a virtual meeting platform 120, a server 130, and a data store 140, each connected to a network 150.

In some implementations, the virtual meeting platform 120 enables users of one or more of the client devices 102A-N, 104 to connect with each other in a virtual meeting (e.g., a virtual meeting 122). A virtual meeting 122 refers to a real-time communication session such as a video-based call or video chat, in which participants can connect with multiple additional participants in real-time and be provided with audio and video capabilities. A virtual meeting 122 may include an audio-based call or chat, in which participants connect with multiple additional participants in real-time and are provided with audio capabilities. Real-time communication refers to the ability for users to communicate (e.g., exchange information) instantly without transmission delays and/or with negligible (e.g., milliseconds or microseconds) latency. The virtual meeting platform 120 can allow a user of the virtual meeting platform 120 to join and participate in a virtual meeting 122 with other users of the virtual meeting platform 120 (such users sometimes being referred to, herein, as "virtual meeting participants" or, simply, "participants"). Implementations of the present disclosure can be implemented with any number of participants connecting via the virtual meeting 122 (e.g., up to one hundred or more).

In implementations of the disclosure, a "user" or "participant" can be represented as a single individual. However, other implementations of the disclosure encompass a "user" being an entity controlled by a set of users or an organization and/or an automated source such as a system or a platform. In situations in which the systems discussed here collect personal information about users, or can make use of personal information, the users can be provided with an opportunity to control whether the virtual meeting platform 120 or the virtual meeting manager 132 collects user information (e.g., information about a user's social network, social actions or activities, profession, a user's preferences, or a user's current location), or to control whether or how to receive content from the virtual meeting platform 120 or the virtual meeting manager 132 that can be more relevant to the user. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over how information is collected about the user and used by the virtual meeting platform 120 or the virtual meeting manager 132.

In some implementations, the server 130 includes a virtual meeting manager 132. The virtual meeting manager 132, in one or more implementations, is configured to manage a virtual meeting 122 between multiple users of the virtual meeting platform 120. The virtual meeting manager 132 can provide the UIs 108A-N to each client device 102A-N, 104 to enable users to watch and listen to each other during a virtual meeting 122. The virtual meeting manager 132 can also collect and provide data associated with the virtual meeting 122 to each participant of the virtual meeting 122. In some implementations, the virtual meeting manager 132 provides the UIs 108A-N for presentation by client applications 105A-N. For example, the respective UIs 108A-N can be displayed on the display devices 107A-107N by the client applications 105A-N executing on the operating systems of the client devices 102A-N, 104. In some implementations, the virtual meeting manager 132 determines visual items for presentation in the UIs 108A-N during a virtual meeting 122. A visual item can refer to a UI element that occupies a particular region in the UI 108A-N and is dedicated to presenting a video stream from a respective client device 102A-N, 104. Such a video stream can depict, for example, a user of the respective client device 102A-N, 104 while the user is participating in the virtual meeting 122 (e.g., speaking, presenting, listening to other participants, watching other participants, etc., at particular moments during the virtual meeting 122), a physical conference or meeting room (e.g., with one or more participants present), a document or media content (e.g., video content, one or more images, etc.) being presented during the virtual meeting 122, etc.

In some implementations, the virtual meeting manager 132 includes a video stream processor 134 and a UI controller 136. Each of the video stream processor 134 or the UI controller 136 may include a software application (or a subset thereof) that performs certain virtual meeting functionality for the virtual meeting manager 132. The video stream processor 134 can be configured to receive video streams from one or more of the client devices 102AN, 104. The video stream processor 134 can be configured to determine visual items for presentation in the UI of such client devices 102A-N, 104 (e.g., the UIs 108-108N, discussed below) during the virtual meeting 122. Each visual item can correspond to a video stream from a client device 102A-N, 104 (e.g., the video stream pertaining to one or more participants of the virtual meeting 122). In some implementations, the virtual meeting 122 further includes, for each participant of the one or more participants, first audio data associated with an audio stream produced by a client device 102A-N, 104 of a respective participant. The video stream processor 134 can receive audio streams associated with the video streams from the client devices (e.g., from an audiovisual component of the client devices 102A-N, 104). Once the video stream processor 134 has determined visual items for presentation in the UI, the video stream processor 134 can notify the UI controller 136 of the determined visual items. The visual items for presentation can be determined based on current speaker, current presenter, order of the participants joining the virtual meeting 122, list of participants (e.g., alphabetical), etc.

In some implementations, the UI controller 136 provides the UI for the virtual meeting 122. The UI can include multiple regions. Each region can display a video stream pertaining to one or more participants of the virtual meeting 122. The UI controller 136 can control which video stream is to be displayed by providing a command to one or more client devices 102A-N, 104 that indicates which video stream is to be displayed in which region of the UI (along with the received video and audio streams being provided to the client devices 102A-N, 104). For example, in response to being notified of the determined visual items for presentation in the UI 108A-N, the UI controller 136 can transmit a command causing each determined visual item to be displayed in a region of the UI and/or rearranged in the UI.

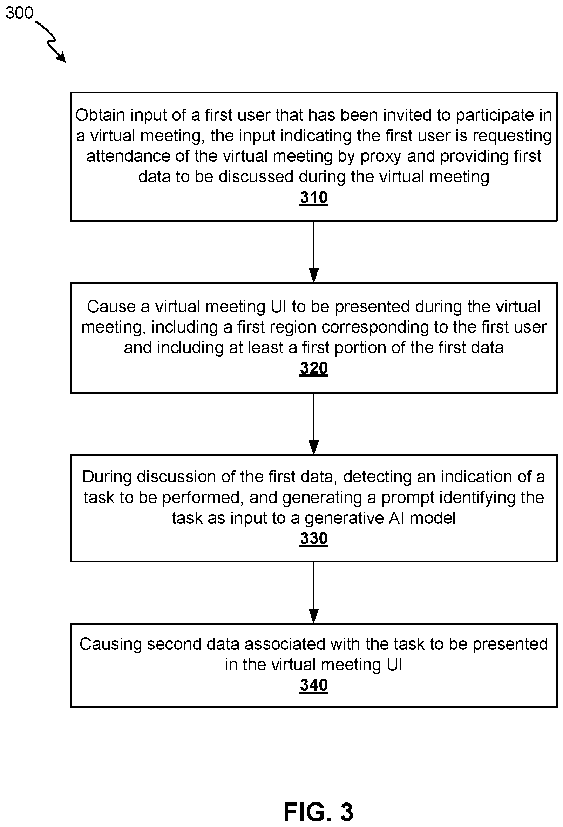

In one or more implementations, the virtual meeting manager 132 includes an absent user manager 138. The absent user manager 138 may include a software application (or a subset thereof) that performs certain virtual meeting functionality for the virtual meeting manager 132. The absent user manager 138 can be configured to present, on a UI associated with the virtual meeting 122, first data associated with a first user that is absent from the virtual meeting 122 (e.g., discussion points, questions, or other materials submitted by the first user). The absent user manager 138 can identify a task to be performed during a discussion of the first data, generate responses to the first data of the first user (e.g., answers to the first user's questions), generate follow-up questions or discussion points to responses to the first data, or perform other functionality related to the first user who is absent from the virtual meeting 122 and attends the virtual meeting 122 by proxy. The absent user manager 138 can generate one or more summaries based on the virtual meeting 122. The absent user manager 138 can perform other virtual meeting functionality, as discussed herein. The absent user manager 138 may include an AI inference subsystem 139. The AI inference subsystem 139 may include one or more AI models configured to generate a transcript of the virtual meeting 122, generate responses to the first user's first data, generate follow-up questions and discussion points, identify tasks based on the virtual meeting's 122 participants' discussion of the first data, generate one or more summaries of the virtual meeting 122, or perform other functionality as discussed herein. The absent user manager 138 can use the AI inference subsystem 139 to assist the absent user manager 138 in performing one or more operations. Some aspects of the functionality of the absent user manager 138 is discussed further below in relation to **FIG. 3****.**

In some implementations, each of the virtual meeting platform 120 or the server 130 include one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that can be used to enable a user to connect with other users via a virtual meeting 122. The virtual meeting platform 120 can also include a website (e.g., one or more webpages) or application back-end software that can be used to enable a user to connect with other users by way of the virtual meeting 122.

In some implementations, the one or more client devices 102A-N each include one or more computing devices such as personal computers (PCs), laptops, mobile phones, smart phones, tablet computers, netbook computers, network-connected televisions, etc. The one or more client devices 102A-N can also be referred to as "user devices." Each client device 102AN can include an audiovisual component that can generate audio and video data to be streamed to the virtual meeting manager 132. The audiovisual component can include a device (e.g., a microphone) to capture an audio signal representing speech of a user and generate audio data (e.g., an audio file or audio stream) based on the captured audio signal. The audiovisual component can include another device (e.g., a speaker) to output audio data to a user associated with a particular client device 102A-N. In some implementations, the audiovisual component includes an image capture device (e.g., a camera) to capture images and generate video data (e.g., a video stream) of the captured data of the captured images.

In some implementations, the system architecture 100 includes a client device 104. The client device 104 can differ from a client device of the one or more client devices 102A-N because the client device 104 can be associated with a physical conference or meeting room. Such client device 104 can include or be coupled to a media system 110 that can include one or more display devices 112, one or more speakers 114 and one or more cameras 116. The display device 112 can be, for example, a smart display or a non-smart display (e.g., a display that is not itself configured to connect to the network 150). Users that are physically present in the room can use the media system 110 rather than their own devices (e.g., one or more of the client devices 102A-N) to participate in the virtual meeting 122, which can include other remote users. For example, the users in the room that participate in the virtual meeting 122 can control the display device 112 to show a slide presentation or watch slide presentations of other participants. Sound and/or camera control can similarly be performed. Similar to the one or more client devices 102A-N, the client device 104 can generate audio and video data to be streamed to the virtual meeting manager 132 (e.g., using one or more microphones, speakers 114 and cameras 116).

As described previously, an audiovisual component of each client device 102A-N, 104 can capture images and generate video data (e.g., a video stream) of the captured data of the captured images. In some implementations, the client devices 102A-N, 104 transmit the generated video stream to the virtual meeting manager 132. The audiovisual component of each client device 102A-N, 104 can also capture an audio signal representing speech of a user and generate audio data (e.g., an audio file or audio stream) based on the captured audio signal. In some implementations, the client devices 102A-N, 104 transmit the generated audio data to the virtual meeting manager 132.

In some implementations, each client device 102A-N or 104 includes a respective client application 105A-N, which can be a mobile application, a desktop application, a web browser, etc. The client application 105A-N can present, on a display device 107A-N of a client device 102A-N or a UI (e.g., a UI of the UIs 108A-N), one or more features of the application 105A-N for users to access the virtual meeting platform 120. For example, a user of a first client device 102A can join and participate in the virtual meeting 122 via a UI 108A presented on the display device 107A by the application 105A. The user can present a document to participants of the virtual meeting 122 via the UI 108A. Each of the UIs 108A-N can include multiple regions to present visual items corresponding to video streams of the client devices 102A-N provided to the server 130 for the virtual meeting 122.

In one or more implementations, at least some portions of the virtual meeting manager 132 and/or the absent user manager 138 are part of a client device 102A-N, 104. For example, the application 105A-N can include the absent user manager 138, which can present data associated with an absent virtual meeting user, generate summaries based on the virtual meeting 122, and perform other functionality. In some implementations, the application 105A of a first client device 102A sends the video stream produced by the client device 102A to the other client devices 102B-N, 104 and receives the video streams from the other client devices 102B-N, 104, and the applications 105A-105N can generate their respective virtual meeting UIs 108A-108N or can finalize their respective UIs 108A-N, which may have been partially generated by the UI controller 136.

In some implementations, the data store 140 is a persistent storage that is capable of storing data as well as data structures to tag, organize, and index the data. A data item can include audio data and/or video stream data, in accordance with implementations described herein. The data store 140 can be hosted by one or more storage devices, such as main memory, magnetic or optical storage-based disks, tapes, hard drives, flash memory, and so forth. In some implementations, the data store 140 is a network-attached file server, while in other implementations, the data store 140 is some other type of persistent storage such as an objectoriented database, a relational database, and so forth, that can be hosted by the virtual meeting platform 120 or one or more different machines (e.g., the server 130) coupled to the virtual meeting platform 120 using the network 150. In some implementations, the data store 140 stores portions of audio and video streams received from one or more client devices 102A-N, 104 for the virtual meeting platform 120. Moreover, the data store 140 can store various types of documents, such as a slide presentation, a text document, a spreadsheet, or any suitable electronic document (e.g., an electronic document including text, tables, videos, images, graphs, slides, charts, software programming code, designs, lists, plans, blueprints, maps, etc.). These documents can be shared with users of the client devices 102A-N, 104 and/or concurrently editable by the users. In some implementations, the data store stores data provided by a user that is absent from the virtual meeting 122 (e.g., discussion points), one or more summaries generated by the absent user manager 138, a transcript of the virtual meeting 122, or other data, as discussed herein.

In some implementations, the network 150 includes a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

It should be noted that in some implementations, the functions of the virtual meeting platform 120 or the server 130 are provided by a fewer number of machines. For example, in some implementations, the server 130 is integrated into a single machine, while in other implementations, the server 130 is integrated into multiple machines. In addition, in one or more implementations, the server 130 is integrated into the virtual meeting platform 120.

In general, one or more functions described in the several implementations as being performed by the virtual meeting platform 120 or server 130 can also be performed by the client devices 102A-N, 104 in other implementations, if appropriate. In addition, in some implementations, the functionality attributed to a particular component can be performed by different or multiple components operating together. The virtual meeting platform 120 or the server 130 can also be accessed as a service provided to other systems or devices through appropriate application programming interfaces, and thus is not limited to use in websites.

Although implementations of the disclosure are discussed in terms of the virtual meeting platform 120 and users of the virtual meeting platform 120 participating in a virtual meeting 122, implementations can also be generally applied to any type of telephone call, conference call, or other technological communications methods between users. Implementations of the disclosure are not limited to virtual meeting platforms that provide virtual meeting tools to users.

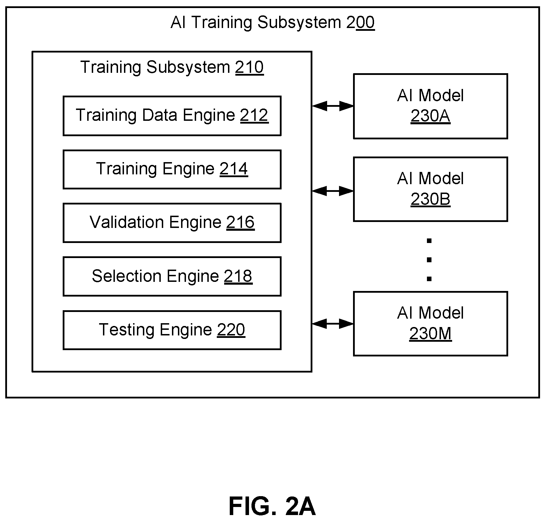

**FIG. 2A** illustrates an example AI training subsystem 200 that can be used to train one or more AI models 230A-M, in accordance with implementations of the present disclosure. As illustrated in **FIG. 2A****,** the AI training subsystem 200 can include a training subsystem 210, which may include a training data engine 212, a training engine 214, a validation engine 216, a selection engine 218, or a testing engine 220. The AI training subsystem 200 may include one or more AI models 230A-M.

In one implementation, an AI model 230A-M includes one or more of artificial neural networks (ANNs), decision trees, random forests, support vector machines (SVMs), clustering-based models, Bayesian networks, or other types of machine learning models. ANNs generally include a feature representation component with a classifier or regression layers that map features to a target output space. The ANN can include multiple nodes ("neurons") arranged in one or more layers, and a neuron can be connected to one or more neurons via one or more edges ("synapses"). The synapses can perpetuate a signal from one neuron to another, and a weight, bias, or other configuration of a neuron or synapse can adjust a value of the signal. Training the ANN may include adjusting the weights or other features of the ANN based on an output produced by the ANN during training.

An ANN may include, for example, a convolutional neural network (CNN), recurrent neural network (RNN), or a deep neural network. A CNN, a specific type of ANN, hosts multiple layers of convolutional filters. Pooling is performed, and non-linearities can be addressed, at lower layers, on top of which a multi-layer perceptron is commonly appended, mapping top layer features extracted by the convolutional layers to decisions (e.g., classification outputs). A deep network may include an ANN with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. An RNN is a type of ANN that includes a memory to enable the ANN to capture temporal dependencies. An RNN is able to learn input-output mappings that depend on both a current input and past inputs. The RNN will address past and future measurements and make predictions based on this continuous measurement information. One type of RNN that can be used is a long short term memory (LSTM) neural network.

ANNs can learn in a supervised (e.g., classification) or unsupervised (e.g., pattern analysis) manner. Some ANNs (e.g., such as deep neural networks) may include a hierarchy of layers, where the different layers learn different levels of representations that correspond to different levels of abstraction. In deep learning, each level learns to transform its input data into a slightly more abstract and composite representation.

In one implementation, an AI model 230A-M includes a generative AI model 230AM. A generative AI model 230A-M can deviate from a machine learning model based on the generative AI model's 230A-M ability to generate new, original data, rather than making predictions based on existing data patterns. A generative AI model 230A-M can include a generative adversarial network (GAN), a variational autoencoder (VAE), a large language model (LLM), or a diffusion model. In some instances, a generative AI model 230A-M can employ a different approach to training or learning the underlying probability distribution of training data, compared to some machine learning models. For instance, a GAN can include a generator network and a discriminator network. The generator network attempts to produce synthetic data samples that are indistinguishable from real data, while the discriminator network seeks to correctly classify between real and fake samples. Through this iterative adversarial process, the generator network can gradually improve its ability to generate increasingly realistic and diverse data.

Generative AI models 230A-M also have the ability to capture and learn complex, high-dimensional structures of data. One aim of generative AI models 230A-M is to model underlying data distribution, allowing them to generate new data points that possess the same characteristics as training data. Some machine learning models (e.g., that are not generative AI models 230A-M) focus on optimizing specific prediction of tasks.

In some implementations, an AI model 230A-M is an AI model that has been trained on a corpus of data. For example, the AI model 230A-M can be an AI model that is first pre-trained on a corpus of data to create a foundational model, and afterwards fine-tuned on more data pertaining to a particular set of tasks to create a more task-specific, or targeted, model. The foundational model can first be pre-trained using a corpus of data that can include data in the public domain, licensed content, and/or proprietary content. Such a pre-training can be used by the AI model 230A-M to learn broad elements including, image or speech recognition, general sentence structure, common phrases, vocabulary, natural language structure, and other elements. In some implementations, this first foundational model is trained using selfsupervision, or unsupervised training on such datasets.

In some implementations, the second portion of training, including fine-tuning, includes unsupervised, supervised, reinforced, or any other type of training. In some implementations, this second portion of training includes some elements of supervision, including learning techniques incorporating human or machine-generated feedback, undergoing training according to a set of guidelines, or training on a previously labeled set of data, etc. In a non-limiting example associated with reinforcement learning, the outputs of the AI model 230A-M while training can be ranked by a user, according to a variety of factors, including accuracy, helpfulness, veracity, acceptability, or any other metric useful in the fine-tuning portion of training. In this manner, the AI model 230A-M can learn to favor these and any other factors relevant to users when generating a response. Further details regarding training are provided below.

In some implementations, an AI model 230A-M includes one or more pre-trained models, or fine-tuned models. In a non-limiting example, in some implementations, the goal of the "fine-tuning" can be accomplished with a second, or third, or any number of additional models. For example, the outputs of the pre-trained model can be input into a second AI model 230A-M that has been trained in a similar manner as the "fine-tuned" portion of training above. In such a way, two more AI models 230A-M can accomplish work similar to one model that has been pre-trained, and then fine-tuned.

In one implementation, the training subsystem 210 manages the training and testing of an AI model 230A-M. The training data engine 212 can generate training data. For example, in the present disclosure the training data may include textual content. The textual content may include one or more meeting transcripts (e.g., one or more virtual meeting transcripts)). The textual content can include other types of text data, such as text documents on various subjects. The training engine 214 can use the textual content training data to train a generative AI model 230A-M configured to generate one or more summaries of a virtual meeting 122.

In some implementations, the training data can include audio data. The audio data may include a recording of a person speaking. The audio data may include one or more phonemes, word fragments, words, sentences, or other portions of speech. Each piece of audio training data may include a corresponding target output that includes a text representation of the audio data of the audio training data. The training data engine 212 can use the audio training data to train a speech-to-text AI model 230A-M configured to generate a transcript of a virtual meeting 122.

In an illustrative example, the training data engine 212 can initialize a training set T to null (e.g., {}). The training data engine 212 can add the training data to the training set T and can determine whether training set T is sufficient for training a AI model 230A-M. The training set T can be sufficient for training the AI model 230A-M if the training set T includes a threshold amount of training data, in some implementations. In response to determining that the training set T is not sufficient for training, the training data engine 212 can identify additional data to use as training data. In response to determining that the training set T is sufficient for training, the training data engine 212 can provide the training set T to the training engine 214.

The training engine 214 can train an AI model 230A-M using the training data (e.g., training set T). The AI model 230A-M can refer to the model artifact that is created by the training engine 214 using the training data, where such training data can include training inputs and, in some implementations, corresponding target outputs. The training engine 214 can input the training data into the AI model 230A-M so that the AI model 230A-M can find patterns in the training data and configure itself based on those patterns.

Where the AI model 230A-M uses supervised learning, the training engine 214 can assist the AI model 230A-M in determining whether the AI model 230A-M maps the training input to the target output. Where the AI model 230A-M uses unsupervised learning, the training engine 214 can input the training data into the AI model 230A-M The AI model 230A-M can configure itself based on the input training data, but since the training data may not include a target output, the training engine 214 may not assist the AI model 230A-M in determining whether the AI model 230A-M provided a correct output during the training process.

The validation engine 216 can be capable of validating a trained AI model 230A-M using a corresponding set of features of a validation set from the training data engine 212. The validation engine 216 can determine an accuracy of each of the trained AI models 230A-M based on the corresponding sets of features of the validation set. Where the training data may not include a target output, validating a trained AI model 230A-M may include obtaining an output from the AI model 230A-M and providing the output to another entity for evaluation. The other entity may include another AI model 230A-M configured to evaluation the output of the AI model 230A-M that is undergoing training. The other entity may include a human. The validation engine 216 can discard a trained AI model 230A-M that has an accuracy that does not meet a threshold accuracy or that otherwise fails evaluation. In some implementations, the selection engine 218 is capable of selecting a trained AI model 230A-M that has an accuracy that meets a threshold accuracy. In some implementations, the selection engine 218 can be capable of selecting the trained AI model 230A-M that has the highest accuracy of multiple trained AI models 230A-M. In some implementations, the selection engine 218 receives input from another AI model 230A-M or a human and can select a trained AI model 230A-M based on the input.

The testing engine 220 can be capable of testing a trained AI model 230A-M using a corresponding set of features of a testing set from the training data engine 212. For example, a first trained AI model 230A that was trained using a first set of features of the training set can be tested using the first set of features of the testing set. The testing engine 220 can determine a trained AI model 230A-M that has the highest accuracy or other evaluation of all of the trained AI models 230A-M based on the testing sets.

In one implementation, the training engine 214 trains an AI model 230A. The AI model 230A may include an AI model 230A-M that generates a summary of a virtual meeting 122. The training data engine 212 can generate training data that includes one or more virtual meeting transcripts, and the training engine 214 can cause the AI model 230A to undergo an AI model training process using the training data. The AI model 230A can undergo a validation and testing process using the validation engine 216 and testing engine 220.

In some implementations, the AI training subsystem 200 is part of the server 130, the virtual meeting manager 132, or the absent user manager 138. Alternatively, the AI training subsystem 200 can be part of another server, system, sub-system, or it can be an independent system. In some implementations, the AI training subsystem 200 provides the trained one or more AI models 230A-M to the absent user manager 138.

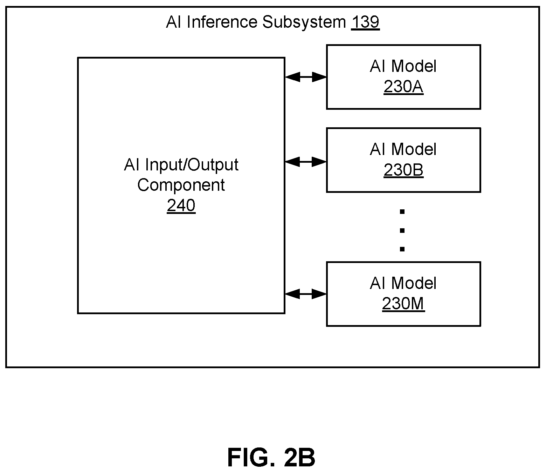

**FIG. 2B** illustrates an example AI inference subsystem 139 that the absent user manager 138 can use to perform one or more operations, in accordance with implementations of the present disclosure. The AI inference subsystem 139 may include one or more AI models 230A-M. The one or more AI models 230A-M may include one or more of the AI models 230A-M trained by the AI training subsystem 200.

In some implementations, the AI inference subsystem 139 include an AI input/output component 240. The AI input/output component 240 can be configured to feed data as input to an AI model 230A-M, e.g., a transcript of the virtual meeting 122 provided by the absent user manager 138. The AI input/output component 240 can be configured to obtain one or more outputs from the one or more AI models 230A-M and provide the one or more outputs to the absent user manager 138.

As indicated above, in some embodiments, an AI model 230A-M includes an LLM. In some embodiments, the LLM includes generative AI functionality. The AI model 230A-M can generate new content based on provided input data (e.g., a transcript of the virtual meeting 122 or first data of a user absent from a virtual meeting 122). The generative AI model 230AM can be supported by a prompt subsystem (not shown), which can reside on the system architecture 100. The prompt subsystem can enable a user or a component of the system architecture 100 to provide input for the generative AI model 230A-M. The prompt subsystem can be configured to perform automated identification of, and facilitate retrieval of, relevant and timely contextual information for efficient and accurate processing of prompts by the AI model 230A-M. Using the network 150 (or another network), the prompt subsystem can be in communication with one or more of the virtual meeting manager 132 or the absent user manager 138. Communications between the prompt subsystem and the AI input/output component 240 can be facilitated by a generative model application programming interface (API), in some embodiments. Communications between the prompt subsystem and the virtual meeting manager 132 or the absent user manager 138 can be facilitated by a data management API. In additional or alternative embodiments, the generative model API translates prompts generated by the prompt subsystem into an unstructured natural-language format and, conversely, translates responses received from the AI model 230A-M into any suitable form (e.g., including any structured proprietary format as can be used by the prompt subsystem). Similarly, the data management API can support instructions that can be used to communicate data requests to the virtual meeting manager 132 or the absent user manager 138 and formats of data received from such components.

The prompt subsystem may include (or may have access to) instructions stored on one or more tangible, machine-readable storage media of a computing device (e.g., the server 130) and executable by one or more processing devices of the computing device. In one embodiment, the prompt subsystem can be implemented on a single machine. In some embodiments, the prompt subsystem can be a combination of a client component and a server component. Alternatively, some portion of the prompt subsystem can be executed on a client computing device while another portion of the query tool can be executed on a server machine.

**FIG.** 3 is a flowchart illustrating one embodiment of a method 300 for the participation, in a virtual meeting, of an absent invited virtual meeting user, in accordance with some implementations of the present disclosure. A processing device, having one or more central processing units (CPU(s)), one or more graphics processing units (GPU(s)), and/or memory devices communicatively coupled to the one or more CPU(s) and/or GPU(s) can perform the method 300 and/or one or more of the method's 300 individual functions, routines, subroutines, or operations. In certain implementations, a single processing thread can perform the method 300. Alternatively, two or more processing threads can perform the method 300, each thread executing one or more individual functions, routines, subroutines, or operations of the method. In an illustrative example, the processing threads implementing the method 300 can be synchronized (e.g., using semaphores, critical sections, and/or other thread synchronization mechanisms). Alternatively, the processing threads implementing the method 300 can be executed asynchronously with respect to each other. Various operations of the method 300 can be performed in a different (e.g., reversed) order compared with the order shown in **FIG. 3****.** Some operations of the method 300 can be performed concurrently with other operations. Some operations can be optional. In some implementations, the absent user manager 138 performs one or more of the operations of the method 300.

At block 310, processing logic obtains input of a first user that has been invited to participate in a virtual meeting 122. The input of the first user can indicate that the first user is unable to attend the virtual meeting 122 and/or will be absent from the virtual meeting 122, and the first user is requesting to attend the virtual meeting 122 by proxy. The input can include or be provided with first data to be discussed during the virtual meeting 122. The virtual meeting manager 132 or the absent user manager 138 can receive the input of the first user.

In one implementation, the input of the first user includes a response to a calendar invite. The calendar invite may include a media type that allows a user to store and exchange calendaring and scheduling information for a calendar event. The calendar event can be associated with the virtual meeting 122 (e.g., the calendar event can correspond to the virtual meeting 122). A calendar invite can be generated by a calendar application. The calendar application can be configured to access a calendar invite and display information based on the calendar invite (e.g., data that indicates a user that organized the corresponding calendar event, a start time, an end time, a location of the calendar event (which may include a physical location or may include data used to access a virtual meeting 122), etc.)). The calendar application may include a software application that executes on a client device 102A-N, 104, executes on the server 130, or executes on another server or cloud platform and provides a UI to the client device 102A-N, 104 of a user.

In some implementations, responsive to the first user using a calendar application to access the calendar invite, the calendar application generates a response to the calendar invite (sometimes referred to herein as a "calendar invite response"). The calendar invite response may include response data indicating whether the first user plans on attending the calendar event corresponding to the calendar invite. The response data can indicate that the first user that received the calendar invite plans on attending, cannot attend, or may be able to attend.

In one implementation, the response data indicates that the first user is requesting attendance of the virtual meeting 122 by proxy. The response data can provide first data to be discussed during the virtual meeting 122. The first data may include textual content. Textual content may include text data (e.g., one or more text strings) or a reference to text data (e.g., a uniform resource locator (URL) that links to text data). The first data may include audio content. Audio content may include an audio file or a reference to audio data (e.g., an audio file stored on the Internet and is accessible using a URL). The first data may include video content. Video content may include a video file or a reference to video data.

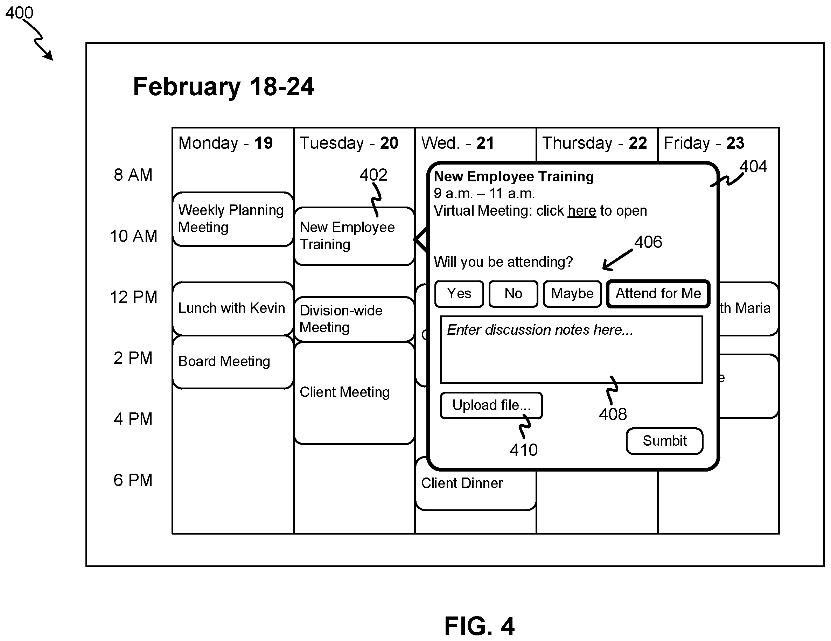

In some implementations, the first user uses the calendar application to input the first data. For example, the calendar application's UI can provide a text box where the user can input textual content or a reference (e.g., URL) to textual, audio, or video content. The calendar application's UI can provide a file selector where a user can select a file on the user's client device 102A-N, or the UI can provide a UI element that allows the user to drag and drop the file. The file may include the textual, video, or audio content. Further details regarding the first user providing the first data using the calendar application is discussed below in relation to **FIG. 4****.**

At block 320, processing logic causes a virtual meeting UI 108A-N to be presented during the virtual meeting 122 between one or more participants. Processing logic can cause the virtual meeting UI 108A-N to include a first region that corresponds to the first user. The first region may include at least a portion of the first data provided by the first user. In some implementations, causing the virtual meeting UI 108A-N to include the first region is performed in response to the absent user manager 138 providing the first data to the UI controller 136.

As discussed above, in one implementation, the virtual meeting 108A-N includes one or more visual items that each correspond to a participant of the virtual meeting 122. For example, a visual item may present a video stream of the respective participant's client device 102A-N, 104. In some implementations, the first region that corresponds to the first user includes a visual item that is similar in appearance to a visual item corresponding to a virtual meeting participant. The first region may be similar in appearance in order to simulate the attendance of the first user at the virtual meeting 122 even though the first user is absent and is attending the virtual meeting 122 by proxy. For example, the first region can be presented in a location of the UI 108A-N that includes the one or more visual items corresponding to the participants of the virtual meeting 122. The first region can have a similar shape, size, color, or other visual characteristic as the visual items. The first region may include an avatar of the first user. The avatar of the first user may include a graphical representation of the first user, which may include an image of the first user, an animated figure representing the first user, or some other content visually identifying the first user.

In one implementation, the at least a portion of the first data included in the first region corresponding to the first user may include a discussion point. The first data may include multiple discussion points, and the first region can present one discussion point at a time. Similarly, the first data may include multiple questions submitted by the first user, and at least a portion of the first data may include a question of the multiple questions. In this manner, in some implementations, the first region presents one discussion point, question, or other data submitted by the first user at a time for discussion during the virtual meeting 122. In one or more implementations, a host or other participant of the virtual meeting 122 can interact with a UI element of the first region in order to cycle through the different portions of the first data.

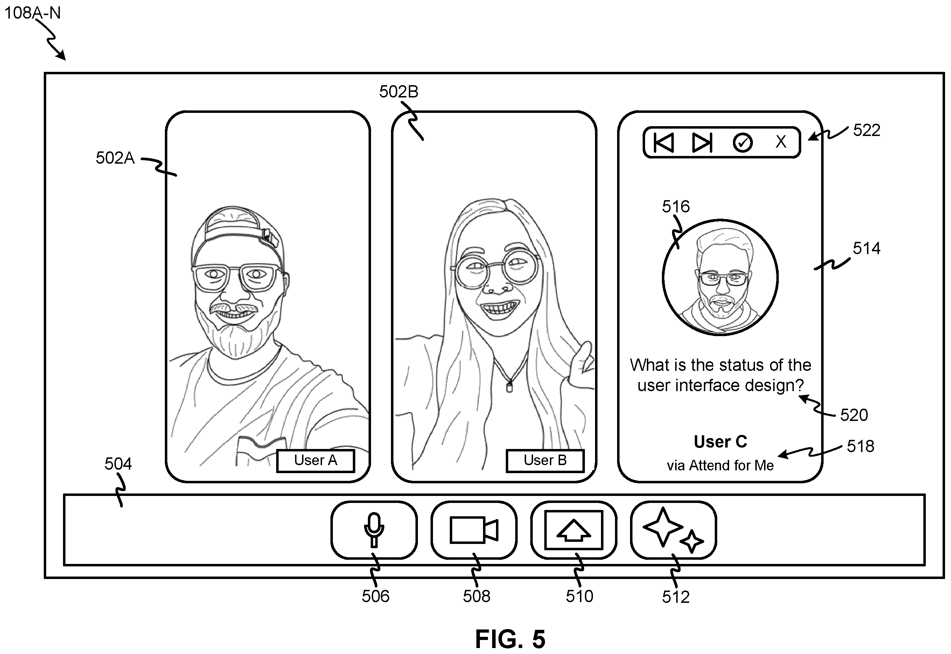

In some implementations, causing the virtual meeting UI 108A-N to present the first region corresponding to the first user is responsive to a host of the virtual meeting 122 interacting with a UI element of the virtual meeting UI 108A-N. For example, the virtual meeting UI 108A-N may include a button, and the host interacting with the button can cause the virtual meeting 108A-N to present the first region. In one implementation, the virtual meeting UI 108A-N presents the first region corresponding to the first user responsive to a predetermined amount of time elapsing since the beginning of the virtual meeting 122. **FIG. 5****,** discussed further below, depicts one example of the first region.

In one or more implementations, processing logic further causes the virtual meeting UI 108A-N to present a list of attendees of the virtual meeting 122. The list of attendees may include the first user. For example, the list of attendees may include, for each attendee, text indicating the name of the attendee, an image representing the attendee, or other information about the attendee. The list of attendees may include, in a location near the name of the attendee, an indicator (e.g., text, an image, or an icon) of the first user's attendance by proxy.

At block 330, processing logic detects, during a discussion of the first data during the virtual meeting 122, an indication of a task to be performed. Processing logic generates a prompt identifying the task as input to a generative AI model 230A-M. The generative AI model 230A-M can be part of the AI inference subsystem 139 of the absent user manager 138. The generative AI model 230A-M may include an LLM or another type of generative AI model as discussed above in relation to **FIGS. 2A** and **2B****.**

A discussion of the first data during the virtual meeting 122 by the virtual meeting's 122 participants may include the participants discussing a task to be performed. The first data can initiate the discussion regarding the task. Processing logic can generate a prompt configured to identify the task and can provide the prompt to a generative AI model 230A-M. Processing logic can detect the indication of the task to be performed by obtaining a portion of a transcript of the virtual meeting 122 and generating the prompt to identify the task based on the portion of the transcript.

In one or more implementations, the virtual meeting manager 132 or some other component of the server 130 can generate a transcript of the virtual meeting 122. Generating the transcript of the virtual meeting 122 may include using a speech-to-text AI model 230AM. The speech-to-text AI model 230A-M can receive, as input, audio data of the stream(s) corresponding to the different participants of the virtual meeting 122 and can generate a text representation of the audio data to generate a transcript of the virtual meeting 122. The virtual meeting manager 132 can store the transcript, e.g., on the server 130 or the data store 140. The speech-to-text AI model 230A-M can generate the transcript in real time during the virtual meeting 122. The absent user manager 138 may have access to the transcript and can use the transcript of the virtual meeting 122 to generate the prompt identifying a task to be performed.

As an example, the first data may include a question submitted by the first user. The question may include, "What are the next steps in the project?" The virtual meeting UI 108AN can present a first region corresponding to the first user, and the first region may include the question. The participants of the virtual meeting 122 can discuss the question, and part of the discussion may include a participant stating, "The next step is to communicate the suggested changes to the project's scope to the client." The speech-to-text AI model 230A-M can generate a text representation of the statement and include the statement in the transcript of the virtual meeting 122. The absent user manager 138 can generate a prompt that includes the command "Identify a task to be performed in the following portion of a meeting transcript." The prompt may further include or identify a portion of the transcript of the virtual meeting that includes the statement, "The next step is to communicate the suggested changes to the project's scope to the client." The absent user manager 138 can provide the prompt to a generative AI model 230A-M.

At block 340, processing logic causes second data associated with the task to be presented in the virtual meeting UI 108A-N. The second data can be based on an output of the generative AI model 230A-M. The second data may include text indicating the task to be performed that was identified by the generative AI model 230A-M.

Continuing the previous example, the generative AI model 230A-M can process the prompt and output, "Communicate the suggested changes to the client." The absent user manager 138 can obtain the generative AI model's 230A-M output and generate, as the second data, a string of text that includes the output. The absent user manager 138 can cause the string of data to be presented in the virtual meeting UI 108A-N. In one implementation, the second data can be presented in the first region corresponding to the first user. In this manner, aspects and implementations of the present disclosure can automatically provide discussion points, questions, or the like that have been submitted by a user that is absent from the virtual meeting 122, automatically identify tasks discussed during the virtual meeting, and present those tasks on a virtual meeting UI 108A-N to the participants of the virtual meeting 122.

In some implementations, the method 300 may further include generating a summary of the virtual meeting 122. The summary can pertain to the discussion of the first data and a discussion of the second data during the virtual meeting 122. The absent user manager 138 can generate the summary of the virtual meeting 122. In some implementations, generating the summary includes generating the summary based on a portion of the transcript corresponding to a portion of the discussion occurring after presentation of the first region. This may allow the summary to cover discussion of the first user's submitted discussion points, questions, or the like, and the first user may access the summary in order to obtain information about what was discussed during the virtual meeting 122 regarding the first user's submitted materials.

During the virtual meeting 122, the participants of the virtual meeting 122 can discuss multiple topics, discussion points, questions, or the like. The first user that is absent from the virtual meeting 122 may desire to know what was discussed during the virtual meeting 122 about the first data that the first user provided. Thus, the summary can cover discussion, during the virtual meeting 122, of the first data. The summary can further cover discussion of the second data generated based on the output of the generative AI model 230A-M.

In some implementations, generating the summary of the virtual meeting 122 includes using a generative AI model 230A-M to generate the summary of the virtual meeting 122. The generative AI model 230A-M can be part of the AI inference subsystem 139 of the absent user manager 138. The generative AI model 230A-M may include an LLM or another type of generative AI model 230A-M as discussed above in relation to **FIGS. 2A** and **2B****.** Using the generative AI model 230A-M to generate the summary of the virtual meeting 122 may include inputting a generative AI prompt into the generative AI model 230A-M. The generative AI prompt can be based, at least in part, on the first data, the second data, or a transcript of the virtual meeting.

In one implementation, the summary includes a text summary. The text summary can include one or more strings of text. The summary may include data in another format (e.g., an audio summary that includes audio data summarizing the virtual meeting 122). In one implementation, the summary includes video content. The video content may include a recording of the virtual meeting UI 108A-N and the associated audio data during a portion of the virtual meeting 122. The portion of the virtual meeting 122 may include the presentation of at least a portion of the first data during the virtual meeting 122.

In some implementations, the summary of the virtual meeting 122 includes one or more summaries of other portions of the virtual meeting 122 besides the discussion of the first data or second data. The summary of the virtual meeting 122 may include a summary of the entire virtual meeting 122. The one or more summaries of the virtual meeting 122 may include one or more summaries of one or more portions of the virtual meeting 122. In one implementation, a generative AI model 230A-M generates the one or more summaries. The generative AI model 230A-M can periodically generate a summary of a portion of the virtual meeting 122. The generative AI model 230A-M can use the transcript of the virtual meeting 122 as input. For example, the generative AI model 230A-M can generate a summary every 10 minutes, and the summary can summarize the transcript of the virtual meeting 122 that corresponds to the previous 10 minutes. In some implementations, a generative AI model 230A-M generates a summary responsive to a user input received from a client device 102AN, 104 of a participant of the virtual meeting 122 (e.g., a user input requesting the summary).

Generating a summary of the virtual meeting 122 can occur during the virtual meeting 122. Generating a summary of the virtual meeting 122 can occur after the conclusion of the virtual meeting 122.

In some implementations, processing logic further causes the virtual meeting UI 108A-N to present a second region. The second region may include a region that presents data in a question-and-answer format. The question-and-answer format may include the second region presenting a question from the first data and the second region further presenting one or more responses to the question.

In some implementations, a participant of the virtual meeting 122 can provide an answer to the question. The participant can provide the answer by typing the answer in a text input UI element associated with the second region. The participant can provide the answer by speaking the answer as audio, the speech-to-text AI model generating a text representation of the answer, and the absent user manager 138 causing the answer to be presented in in the second region.

In some implementations, the absent user manager 138 can provide an answer to a question. The absent user manager 138 can use a generative AI model 230A-M to generate a response to the question. The absent user manager 138 can generate a generative AI prompt based on, at least in part, the question and the transcript of the virtual meeting 122. The generative AI prompt may include a command to generate a response to the question based on the transcript. The absent user manager 138 can input the generative AI prompt into the generative AI model 230A-M and obtain an output. The absent user manager 138 can cause the second region to present the output as a response to the question. For example, the question presented in the second region may include, "What is the status of the user interface design?" The absent user manager 138 can generate a generative AI prompt that includes the command "Use the following portion of a meeting transcript to answer the question, 'What is the status of the user interface design?‴ and further includes at least a portion of the virtual meeting 122 transcript.

In one implementation, the absent user manager 138 generates one or more follow-up questions to a response to the question. The absent user manager 138 can generate a generative AI prompt based, at least in part, on the response to the question. The generative AI prompt may include a command to generate one or more follow-up questions based on the question and one or more responses to the question. The absent user manager 138 can input the generative AI prompt into the generative AI model 230A-M and obtain an output. The absent user manager 138 can cause the second region to present the output as follow-up questions. For example, the question presented in the second region may include, "What is the status of the user interface design?" A response may include "User A explains that the team is making good progress and is on track to finish by the deadline." The absent user manager 138 can generate a generative AI prompt that includes the command "Generate one or more follow-up questions to the following question and answer: Question: What is the status of the user interface design? Answer: The team is making good progress and is on track to finish by the deadline."

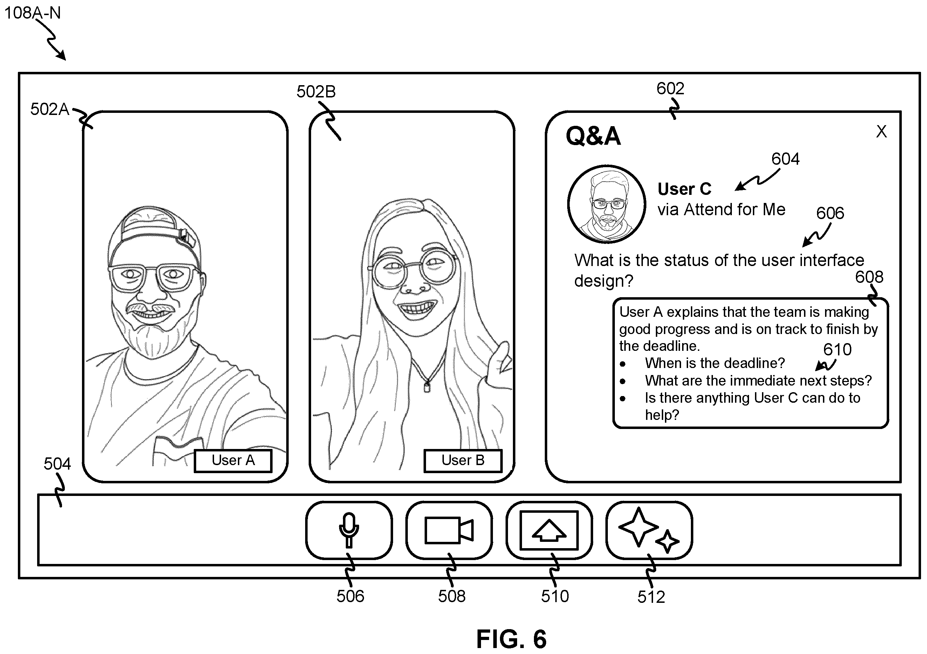

In some implementations, the absent user manager 138 causes the questions of the first data, the responses to the questions, and the follow-up questions to the responses to be included in the virtual meeting's 122 transcript. The absent user manager 138 can cause the questions of the first data, the responses to the questions, and the follow-up questions to the responses to be included in the summary of the virtual meeting 122. **FIG. 6****,** discussed further below, depicts an example virtual meeting UI 108A-N that includes a second region including a question, a response, and follow-up questions.

In some implementations, the absent user manager 138 causes the summary to be accessible by a client device 102A-N, 104 of the first user associated with the virtual meeting 122. In some implementations, the absent user manager 138 stores the summary on the server 130, the data store 140, a cloud storage, a content management platform, or some other location. Causing the summary to be accessible by the client device 102A-N, 104 of the first user may include providing a reference to the summary stored on the server 130, in the data store 140, in the cloud storage, on the content management platform, etc. The summary being accessible by the client device 102A-N, 104 of the first user may include the absent user manager 138 providing a reference to the summary (e.g., a URL associated with the stored summary) to the first user's client device 102A-N, 104. In one implementation, the absent user manager 138 provides the summary to the client device 102A-N, 104 (e.g., by providing a file containing the summary to the client device 102A-N, 104 over the network 150).

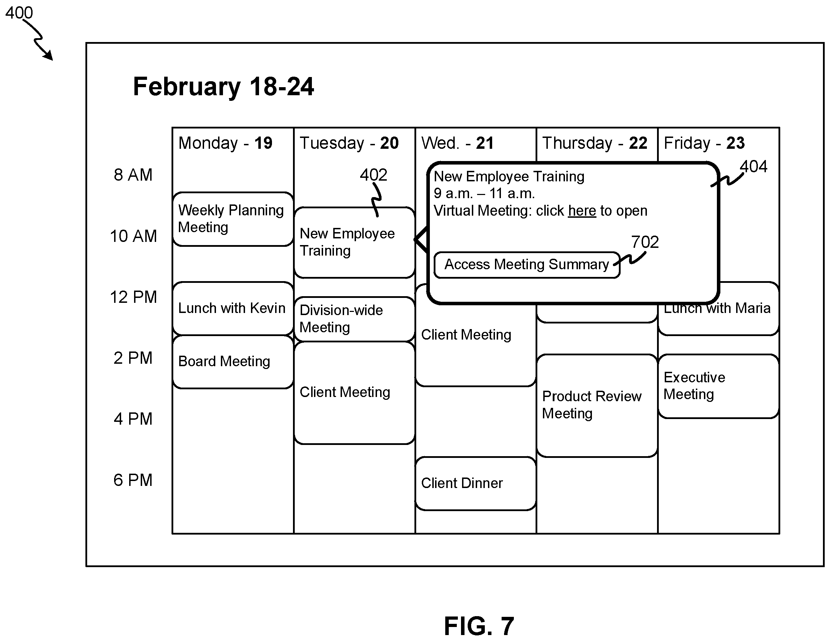

In some implementations, causing the summary to be accessible by the client device 102A-N, 104 of the first user includes causing the summary to be accessible from a calendar invite. The calendar invite may include the calendar invite associated with the virtual meeting 122. For example, the software calendar application can display, on a UI of the calendar application, a calendar showing a block of time corresponding to the virtual meeting 122. Responsive to the first user interacting with the block of time on the UI, the UI can display an option for the client device 102A-N, 104 to access the summary. **FIG. 7****,** discussed further below, depicts an example calendar invite that includes an option for the client device 102AN, 104 to access a virtual meeting summary.

In one implementation, processing logic records at least a portion of a presentation of the virtual meeting UI 108A-N and the first audio data of the one or more participants. The processing logic can cause the recorded at least a portion of the presentation and the first audio data to be accessible by the client device 102A-N, 104 of the first user. The absent user manager 138 can store the recorded presentation and audio data on the server 130, the data store 140, or some other location. The absent user manager 138 can cause the presentation and audio data to be accessible, similar to the absent user manager 138 causing the summary of the virtual meeting 122 to be accessible to the first user's client device 102A-N, 104, as discussed above.

In some implementations, multiple invited users of a virtual meeting 122 request attendance of the virtual meeting 122 by proxy. Processing logic can obtain input of a second user that has been invited to participate in the virtual meeting 122. The input can indicate that the second user is also requesting attendance of the virtual meeting 122 by proxy. The input can provide second data to be discussed during the virtual meeting 122. Like the first data provided by the first user, the third data can also include discussion points, actions items, questions, or other information to be discussed during the virtual meeting 122.

The first region (e.g., the first region that corresponds to the first user, as discussed above) can further correspond to the second user. The first region can further include at least a portion of the third data. In one implementation, the first region is toggleable between the at least a portion of the first data and the at least a portion of the third data. The first region may include a UI element that allows a participant of the virtual meeting 122 to change which user is represented by the first region.

As an example, in a virtual meeting 122, a first user and a second user may have each indicated that the respective user is attending the meeting by proxy. The first user may have submitted first data, and the second user may have submitted third data. In response to the first region being initialized, the first region can initially present a portion of the first data of the first user. A participant can interact with a UI element of the first region to cause the first region to present a portion of the third data of the second user. A participant can interact with a UI element of the first region to cause the first region to present the portion of the first data again.

**FIG. 4** depicts an example UI 400 of a calendar application, according to some implementations. The UI 400 may be displayed on a display 107A-N of a client device 102AN, 104. The UI 400 may include UI elements corresponding to one or more days of a week and one or more times during the day. For example, as seen in **FIG. 4****,** the UI 400 includes five column UI elements corresponding to the days Monday, Tuesday, Wednesday, Thursday, and Friday of a week. As can also be seen in **FIG. 4****,** the UI 400 can include times of the day along a left side of the UI 400. Where a day column and a time intersect, the UI 400 may include a UI element corresponding to a calendar event scheduled for that day and time. For example, as seen in **FIG. 4****,** the UI 400 includes a calendar event 402 scheduled for Tuesday from 9 a.m. to 11 a.m. that is entitled "New Employee Training."

In some implementations, responsive to a user interacting with the calendar event 402 UI element (e.g., by clicking on the UI element with a mouse or tapping the UI element on a touch screen), the UI 400 displays a detailed view 404 UI element corresponding to the calendar event 402. The detailed view 404 UI element can display further information associated with the calendar event 402. For example, as seen in **FIG. 4****,** the detailed view 404 includes the title of the calendar event 402, the date and time of the calendar event 402, and a location of the calendar event. The location may include a virtual meeting 122. The user can access the virtual meeting 122 by interacting with a certain portion of the detailed view 404 (e.g., a URL included in the detailed view 404).

In one or more implementations, the detailed view 404 includes one or more UI elements that allow a user to indicate whether the user plans on attending the calendar event 402. For example, as seen in **FIG. 4****,** the detailed view 404 includes buttons 406 labeled "Yes" to indicate that the user plans on attending, "No" to indicate that the user does not plan on attending, and "Maybe" to indicate that the user may attend. The buttons 406 can include an "Attend for Me" button to indicate that the user does not plan on attending the calendar event 402, but the user will provide first data, which may include discussion points, questions, or other materials submitted by the first user and to be discussed during the virtual meeting 122. Responsive to the user interacting with the "Attend for Me" button, as seen in **FIG. 4****,** the UI 400 can display one or more UI elements where the user can provide the first data. For example, the UI can display a text box 408 where the user can input textual content or where the user can input a reference (e.g., a URL) to video content, audio content, or other types of content. The UI 400 can display a button 410 that opens a file selector that allows the user to select an audio file, video file, or another type of file. Responsive to the user finishing inputting the first data (e.g., by interacting with a "Submit" button, as seen in **FIG. 4**), the first data can be provided to the absent user manager 138.

In some implementations, the user that plans on attending the virtual meeting 122 by proxy can modify the first data after the absent user manager 138 obtains the first data. For example, the user can interact with the detailed view 404 again and use the text box 408 or file selector button 410 to input different first data, modify the originally provided first data, or remove at least a portion of the originally provided first data.

**FIG. 5** depicts an example virtual meeting UI 108A-N, according to some implementations. The virtual meeting UI 108A-N may include one or more regions 502A-B corresponding to a visual item of the virtual meeting 122, such as a video stream provided by a client device 102A-N, 104 of a participant of the virtual meeting 122. The virtual meeting UI 108A-N can include a tool bar 504 that includes one or more UI elements configured to perform virtual meeting 122 operations. For example, as seen in **FIG. 5****,** the tool bar 504 includes an audio control button 506 used to mute and unmute a participant's audio stream, a camera control button 508 used to mute and unmute a participant's video stream, and a screen share button 510 used to share a participant's client device's 102A-N, 104 screen with other participants of the virtual meeting 122. In some implementations, the tool bar 504 may include one or more buttons 512 that, responsive to a participant interacting with the buttons 512, cause an AI model 230A-M to perform one or more virtual meeting 122 functions (e.g., generate a summary of at least a portion of the virtual meeting 122, generate action items, or other virtual meeting functionality discussed herein).

In one implementation, the virtual meeting UI 108A-N includes a first region 514 corresponding to a visual item of the virtual meeting 122. The visual item may include a visual item configured to present first data provided by the first user, who is attending the virtual meeting 122 by proxy. A participant can cause the UI 108A-N to present the first region 514 by interacting with a UI element of the UI 108A-N (e.g., interacting with a button of the buttons 512).

The first region 514 may include a visual representation 516 of the first user. In one or more implementations, the visual representation 516 may include an avatar of the first user or some other type of visual representation. The first region 514 may include text 518 indicating an identity of the first user. The text 518 may include the first user's name, username, or other identifying information. The text 518 may indicate that the first user is attending the virtual meeting 122 by proxy (e.g., as seen in **FIG. 5****,** "via Attend for Me").

In some implementations, the first region 514 includes at least a portion of the first data 520 provided by the first user. For example, as seen in **FIG. 5****,** the at least a portion of the first data 520 includes the question, "What is the status of the user interface design?" The region 514 can display the at least a portion of the first data 520 so that other participants of the virtual meeting 122 can view the at least a portion of the first data 520 and discuss it. The at least a portion of the first data 520 may include text or video content. The at least a portion of the first data 520 may include audio content, in which case the first region 514 may include an audio control UI element that controls playback of the audio content (e.g., using "play," "pause," "rewind," "fast-forward," etc. buttons). The at least a portion of the first data 520 may include other types of content.

In one or more implementations, the first region 514 includes an absent user control panel 522. The absent user control panel 522 may include a UI element that allows a participant in the virtual meeting 122 to control the first region 514. The absent user control panel 522 may include a next button and a back button. The next button can cause the first region 514 to display a subsequent portion of the first data 520, and the back button can cause the first region 514 to display a previous portion of the first data 520. For example, as seen in **FIG. 5****,** the next button and back button may include a left-facing arrow and a right-facing arrow, respectively. The next and back buttons can cause the first region 514 to toggle between different users that are attending the virtual meeting 122 by proxy, which may include causing the first data 520 to change to present discussion points, questions, or other data submitted by the user currently represented by the first region 514.

The absent user control panel 522 may include a completion button. The interacting with the completion button may indicate to the absent user manager 138 that discussion about the currently displayed portion of the first data 520 has finished. Indicating that the discussion about the currently displayed portion of the first data 520 has finished can assist an AI model 230A-M when generating a summary of the virtual meeting 122. For example, as seen in **FIG. 5****,** the completion button may include a circle with a checkmark. The absent user control panel 522 may include a close button. Interacting with the close button can cause the UI 108A-N to stop displaying the first region 514.

In some implementations, the virtual meeting manager 132 or the absent user manager 138 can be configured to allow only a predetermined participant of the virtual meeting 122 to cause the UI 108A-N to display the first region 514. The predetermined participant may include the host of the virtual meeting 122. The predetermined participant may include a user designated by the host of the virtual meeting 122. In other implementations, any participant of the virtual meeting 122 can cause the UI 108A-N to display the first region 514. In one implementation, the first region 514 can be displayed on all of the UIs 108A-N of the participants of the virtual meeting 122, and one participant causing the first region 514 to change (e.g., by interacting with the next button of the absent user control panel 522 to cause the portion of first data 520 to change) can cause the first region 514 to change on all of the UIs 108A-N of the other participants. In other implementations, a participant causing the first region 514 to change may not cause the first region 514 to change on other UIs 108A-N of other participants.

**FIG. 6** depicts another example virtual meeting UI 108A-N, according to some implementations. Similar to the UI 108A-N of **FIG. 5****,** the UI 108A-N of **FIG. 6** may include the one or more regions 502A-B and the tool bar 504 with its respective UI elements 506-512. The UI 108A-N may include a second region 602. The second region 602 may include a visual item. The visual item may include a visual item configured to present first data provided by the first user. The second region 602 may include a question-and-answer (Q&A) format. The second region 602 may include data 604 identifying the first user. For example, as seen in **FIG. 6****,** the data 604 identifying the first user may include a visual representation of the user (e.g., an image of the user), a name or username of the user, and text indicating that the user is using attend-for-me functionality.

The second region 602 may include at least a portion of first data 606. The at least a portion of the first data 606 can be similar to the at least a portion of the first data 520 of **FIG. 5****.** The second region 602 may include a response UI element 608. The response UI element 608 can be associated with a portion of first data 606. The response UI element 608 may include data that is relevant to the portion of first data 606. For example, the response UI element 608 may include a text response to a question of the portion of first data 606. As discussed above, the response UI element 608 may include a response provided by one or more participants of the virtual meeting 122 or may include a response generated by a generative AI model 230AM.

In some implementations, the response UI element 608 may include one or more follow-up questions 610. As discussed above, a generative AI model 230A-M can use the response as input and can generate one or more follow-up questions 610, which can simulate the absent user interacting with the response to obtain more information. The response UI element 608 can display the one or more follow-up questions 610 automatically or can display them in response to participant interaction with the response UI element 608 (e.g., the host of the virtual meeting 122 interacting with a menu option to generate the follow-up questions 610).

**FIG. 7** depicts another example UI 400 of a calendar application, according to some implementations. The UI 400 may include one or more components of the UI 400 discussed above in relation to **FIG. 4****,** including one or more columns corresponding to days of a week, one or more times, one or more calendar events (e.g., the calendar event 402), and the detailed view 404 corresponding to the calendar event 402.

In some implementations, the UI 400 of **FIG. 7** includes the UI 400 after the calendar event 402 has occurred. As can be seen in **FIG. 7****,** the detailed view 404 corresponding to the calendar event 402 does not include the buttons 406 used to indicate whether the user can attend the calendar event 402. The detailed view 404 may include a UI element configured to provide access to a summary of the virtual meeting 122. The summary may include a summary of the discussion during the virtual meeting 122, discussion regarding the first data provided by the first user, responses to questions of the first data, follow-up questions, or other data. As an example, the UI element may include a button 702, and responsive to the user interacting with the button 702, the absent user manager 138 can cause the summary to be accessible by the client device 102A-N, 104 of the absent user, as discussed above. For example, responsive to the first user interacting with the button 702, the absent user manager 138 can provide a file to the client device 102A-N of the user over the network 150, and the file may include the summary in a text format. The absent user manager 138 can provide a reference (e.g., a URL) to data that includes the summary (e.g., a URL to a location in cloud storage). The detailed view 404 may include other UI elements that can allow the first user to access the transcript of the virtual meeting 122, a video recording of the virtual meeting 122, notes or action items of the virtual meeting 122, or other content associated with the virtual meeting 122.

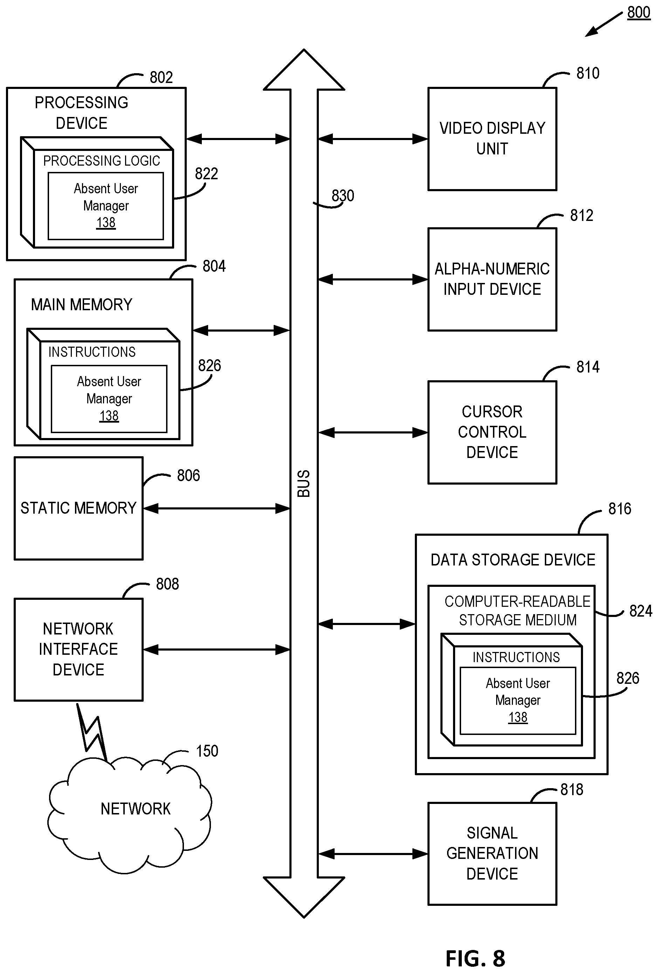

**FIG. 8** is a block diagram illustrating an example computer system, in accordance with implementations of the present disclosure. The computer system 800 can include a client device 102A-N, 104, the virtual meeting platform 120, or the server 130 in **FIG. 1****.** The machine can operate in the capacity of a server or an endpoint machine, in an endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 800 includes a processing device (processor) 802, a main memory 804 (e.g., read-only memory (ROM), flash memory, dynamic random access memory (DRAM) such as synchronous DRAM (SDRAM), double data rate (DDR SDRAM), or DRAM (RDRAM), etc.), a static memory 806 (e.g., flash memory, static random access memory (SRAM), etc.), and a data storage device 816, which communicate with each other via a bus 830.

The processing device 802 represents one or more general-purpose processing devices such as a microprocessor, central processing unit, or the like. More particularly, the processing device 802 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 802 can also be one or more specialpurpose processing devices such as an application specific integrated circuit (ASIC), a field programmable gate array (FPGA), a digital signal processor (DSP), network processor, or the like. The processing device 802 is configured to execute the processing logic 822 for performing the operations discussed herein (e.g., the operations of the absent user manager 138).

The computer system 800 can further include a network interface device 808. The computer system 800 also can include a video display unit 810 (e.g., a liquid crystal display (LCD) or a cathode ray tube (CRT)), an input device 812 (e.g., a keyboard, and alphanumeric keyboard, a motion sensing input device, touch screen), a cursor control device 814 (e.g., a mouse), and a signal generation device 818 (e.g., a speaker).

The data storage device 816 can include a non-transitory machine-readable storage medium 824 (sometimes referred to as a "computer-readable storage medium") on which is stored one or more sets of instructions 826 (e.g., the instructions to carry out one or more operations of the absent user manager 138) embodying any one or more of the methodologies or functions described herein. The instructions can also reside, completely or at least partially, within the main memory 804 and/or within the processing device 802 during execution thereof by the computer system 800, the main memory 804 and the processing device 802 also constituting machine-readable storage media. The instructions can further be transmitted or received over the network 150 via the network interface device 808.

In one implementation, the instructions 826 include instructions for determining visual items for presentation in a user interface of a virtual meeting. While the computer-readable storage medium 824 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," or "an implementation," means that a particular feature, structure, or characteristic described in connection with the implementation is included in at least one implementation. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interact between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collect data is anonymized prior to performing any analysis to obtain any statistical patterns so that the identity of the user cannot be determined from the collected data.

The specification includes the following subject-matter expressed in the form of clauses 1-22:
1. A method, comprising:
   obtaining input of a first user that has been invited to participate in a virtual meeting between a plurality of participants, wherein the input:
      indicates the first user is requesting attendance of the virtual meeting by proxy, and
      provides first data to be discussed during the virtual meeting;
   causing a virtual meeting user interface (UI) presented during the virtual meeting to include a first region corresponding to the first user, wherein the first region comprises at least a portion of the first data;
   during a discussion of the first data during the virtual meeting, detecting an indication of a task to be performed, and generating a prompt identifying the task as input to a generative AI model; and
   causing second data associated with the task to be presented in the virtual meeting UI, the second data associated with the task being based on an output of the generative AI model.
2. The method of clause 1, wherein causing the virtual meeting UI to present the first region corresponding to the first user is responsive to a host of the virtual meeting interacting with a UI element of the virtual meeting.
3. The method of clause 1 or clause 2, further comprising causing the virtual meeting UI to present a list of attendees of the virtual meeting, wherein the list of attendees comprises the first user.
4. The method of any of clauses 1-3, further comprising:
   causing the virtual meeting UI to present a second region, wherein the second region comprises a question of the first data; and
   using the generative AI model to generate a response to the question.
5. The method of clause 4, wherein using the generative AI model to generate the response comprises inputting a generative AI prompt into the generative AI model, wherein the generative AI prompt is based, at least in part, on the question and a transcript of the virtual meeting.
6. The method of clause 4 or clause 5, further comprising inputting a generative AI prompt into the generative AI model to generate one or more follow-up questions, wherein the generative AI prompt is based, at least in part, on the response to the question of the first data.
7. The method of any of clauses 1-6, wherein the first region further comprises an avatar of the first user.
8. A system, comprising:
   a memory; and
   a processing device, coupled to the memory, configured to perform operations comprising:
      obtaining input of a first user that has been invited to participate in a virtual meeting between a plurality of participants, wherein the input:
         indicates the first user is requesting attendance of the virtual meeting by proxy, and
         provides first data to be discussed during the virtual meeting,
      causing a virtual meeting user interface (UI) presented during the virtual meeting to include a first region corresponding to the first user, wherein the first region comprises at least a portion of the first data,
      during a discussion of the first data during the virtual meeting, detecting an indication of a task to be performed, and generating a prompt identifying the task as input to a generative AI model, and
      causing second data associated with the task to be presented in the virtual meeting UI, the second data associated with the task being based on an output of the generative AI model.
9. The system of clause 8, wherein the operations further comprise generating a summary of the virtual meeting, wherein the summary pertains to the discussion of the first data and a discussion of the second data during the virtual meeting.
10. The system of clause 9, wherein generating the summary of the virtual meeting comprises generating the summary based on a portion of a transcript of the virtual meeting corresponding to a portion of the discussion occurring after presentation of the first region.
11. The system of any of clauses 8-10, wherein causing the virtual meeting UI to present the first region corresponding to the first user is responsive to a host of the virtual meeting interacting with a UI element of the virtual meeting.
12. The system of any of clauses 8-11, wherein the operations further comprise causing the virtual meeting UI to present a list of attendees of the virtual meeting, wherein the list of attendees comprises the first user.
13. The system of any of clauses 8-12, wherein:
   the operations further comprise causing the virtual meeting UI to present a second region, wherein the second region comprises a question of the first data; and
   using the generative AI model to generate the second data comprises the generative AI model generating a response to the question.
14. The system of clause 13, wherein using the generative AI model to generate the response comprises inputting a generative AI prompt into the generative AI model, wherein the generative AI prompt is based, at least in part, on the question and a transcript of the virtual meeting.
15. The system of clause 13 or clause 14, wherein the operations further comprise inputting a generative AI prompt into the generative AI model to generate one or more follow-up questions, wherein the generative AI prompt is based, at least in part, on the response to the question of the first data.
16. A non-transitory computer-readable storage medium comprising instructions, wherein a processing device, responsive to executing the instructions, is configured to perform operations comprising:
   obtaining input of a first user that has been invited to participate in a virtual meeting between a plurality of participants, wherein the input:
      indicates the first user is requesting attendance of the virtual meeting by proxy, and
      provides first data to be discussed during the virtual meeting;
   causing a virtual meeting user interface (UI) presented during the virtual meeting to include a first region corresponding to the first user, wherein the first region comprises at least a portion of the first data;
   during a discussion of the first data during the virtual meeting, detecting an indication of a task to be performed, and generating a prompt identifying the task as input to a generative AI model; and
   causing second data associated with the task to be presented in the virtual meeting UI, the second data associated with the task being based on an output of the generative AI model.
17. The computer-readable storage medium of clause 16, wherein:
   the operations further comprise obtaining input of a second user that has been invited to participate in the virtual meeting, wherein the input indicates the second user is requesting attendance of the virtual meeting by proxy, and wherein the input provides third data to be discussed during the virtual meeting; and
   the first region further corresponds to the second user, wherein the first region further comprises at least a portion of the third data.
18. The computer-readable storage medium of clause 17, wherein the first region is toggleable between the at least a portion of the first data and the at least a portion of the third data.
19. The computer-readable storage medium of any of clauses 16-18, wherein causing the virtual meeting UI to present the first region corresponding to the first user is responsive to a host of the virtual meeting interacting with a UI element of the virtual meeting.
20. The computer-readable storage medium of any of clauses 16-19, wherein:
   the operations further comprise causing the virtual meeting UI to present a second region, wherein the second region comprises a question of the first data; and
   using the generative AI model to generate the second data comprises the generative AI model generating a response to the question.
21. A computer program product comprising instructions which, when executed by one or more processors, cause the processors to perform the method of any of clauses 1-7.
22. Computer-executable instructions which, when executed by one or more processors, cause the processors to perform the method of any of clauses 1-7.

## Claims

1. A method, comprising:
obtaining input of a first user that has been invited to participate in a virtual meeting between a plurality of participants, wherein the input:
indicates the first user is requesting attendance of the virtual meeting by proxy, and
provides first data to be discussed during the virtual meeting;
causing a virtual meeting user interface (UI) presented during the virtual meeting to include a first region corresponding to the first user, wherein the first region comprises at least a portion of the first data;
during a discussion of the first data during the virtual meeting, detecting an indication of a task to be performed, and generating a prompt identifying the task as input to a generative AI model; and
causing second data associated with the task to be presented in the virtual meeting UI, the second data associated with the task being based on an output of the generative AI model.

2. The method of claim 1, wherein causing the virtual meeting UI to present the first region corresponding to the first user is responsive to a host of the virtual meeting interacting with a UI element of the virtual meeting; and/or
further comprising causing the virtual meeting UI to present a list of attendees of the virtual meeting, wherein the list of attendees comprises the first user.

3. The method of claim 1 or claim 2, further comprising:
causing the virtual meeting UI to present a second region, wherein the second region comprises a question of the first data; and
using the generative AI model to generate a response to the question.

4. The method of claim 3, wherein using the generative AI model to generate the response comprises inputting a generative AI prompt into the generative AI model, wherein the generative AI prompt is based, at least in part, on the question and a transcript of the virtual meeting; and/or
further comprising inputting a generative AI prompt into the generative AI model to generate one or more follow-up questions, wherein the generative AI prompt is based, at least in part, on the response to the question of the first data.

5. The method of any of claims 1-4, wherein the first region further comprises an avatar of the first user.

6. A system, comprising:
a memory; and
a processing device, coupled to the memory, configured to perform operations comprising:
obtaining input of a first user that has been invited to participate in a virtual meeting between a plurality of participants, wherein the input:
indicates the first user is requesting attendance of the virtual meeting by proxy, and
provides first data to be discussed during the virtual meeting,
causing a virtual meeting user interface (UI) presented during the virtual meeting to include a first region corresponding to the first user, wherein the first region comprises at least a portion of the first data,
during a discussion of the first data during the virtual meeting, detecting an indication of a task to be performed, and generating a prompt identifying the task as input to a generative AI model, and
causing second data associated with the task to be presented in the virtual meeting UI, the second data associated with the task being based on an output of the generative AI model.

7. The system of claim 6, wherein the operations further comprise generating a summary of the virtual meeting, wherein the summary pertains to the discussion of the first data and a discussion of the second data during the virtual meeting.

8. The system of claim 7, wherein generating the summary of the virtual meeting comprises generating the summary based on a portion of a transcript of the virtual meeting corresponding to a portion of the discussion occurring after presentation of the first region.

9. The system of any of claims 6-8, wherein causing the virtual meeting UI to present the first region corresponding to the first user is responsive to a host of the virtual meeting interacting with a UI element of the virtual meeting; and/or
wherein the operations further comprise causing the virtual meeting UI to present a list of attendees of the virtual meeting, wherein the list of attendees comprises the first user.

10. The system of any of claims 6-9, wherein:
the operations further comprise causing the virtual meeting UI to present a second region, wherein the second region comprises a question of the first data; and
using the generative AI model to generate the second data comprises the generative AI model generating a response to the question.

11. The system of claim 10, wherein using the generative AI model to generate the response comprises inputting a generative AI prompt into the generative AI model, wherein the generative AI prompt is based, at least in part, on the question and a transcript of the virtual meeting; and/or
wherein the operations further comprise inputting a generative AI prompt into the generative AI model to generate one or more follow-up questions, wherein the generative AI prompt is based, at least in part, on the response to the question of the first data.

12. A non-transitory computer-readable storage medium comprising instructions, wherein a processing device, responsive to executing the instructions, is configured to perform operations comprising:
obtaining input of a first user that has been invited to participate in a virtual meeting between a plurality of participants, wherein the input:
indicates the first user is requesting attendance of the virtual meeting by proxy, and
provides first data to be discussed during the virtual meeting;
causing a virtual meeting user interface (UI) presented during the virtual meeting to include a first region corresponding to the first user, wherein the first region comprises at least a portion of the first data;
during a discussion of the first data during the virtual meeting, detecting an indication of a task to be performed, and generating a prompt identifying the task as input to a generative AI model; and
causing second data associated with the task to be presented in the virtual meeting UI, the second data associated with the task being based on an output of the generative AI model.

13. The computer-readable storage medium of claim 12, wherein:
the operations further comprise obtaining input of a second user that has been invited to participate in the virtual meeting, wherein the input indicates the second user is requesting attendance of the virtual meeting by proxy, and wherein the input provides third data to be discussed during the virtual meeting; and
the first region further corresponds to the second user, wherein the first region further comprises at least a portion of the third data.

14. The computer-readable storage medium of claim 13, wherein the first region is toggleable between the at least a portion of the first data and the at least a portion of the third data.

15. The computer-readable storage medium of any of claims 12-14, wherein causing the virtual meeting UI to present the first region corresponding to the first user is responsive to a host of the virtual meeting interacting with a UI element of the virtual meeting; and/or wherein:
the operations further comprise causing the virtual meeting UI to present a second region, wherein the second region comprises a question of the first data; and
using the generative AI model to generate the second data comprises the generative AI model generating a response to the question.
